# EUROPÄISCHE PATENTSCHRIFT

(11) **EP 3 322 634 B1**
(45) Veröffentlichungstag und Bekanntmachung des Hinweises auf die Patenterteilung: **10.04.2019**
(21) Anmeldenummer: 16721372.7
(22) Anmeldetag: 21.04.2016
(51) Int. Cl.: B62J 17/02

(54) **LUFTLEITVORRICHTUNG FÜR EIN MOTORRAD**
AIR-GUIDING DEVICE FOR A MOTORCYCLE
DISPOSITIF DE GUIDAGE D'AIR POUR MOTOCYCLETTE

(30) Priorität: 15.07.2015 DE 102015213208
(43) Veröffentlichungstag der Anmeldung: 23.05.2018
(73) Patentinhaber: Bayerische Motoren Werke Aktiengesellschaft, 80809 München (DE)
(72) Erfinder: FAULHABER, Patrick, 83661 Lenggries (DE); WENDT, Dieter, 85221 Dachau (DE)
(86) Internationale Anmeldenummer: PCT/EP2016/058827
(87) Internationale Veröffentlichungsnummer: WO 2017/008929

(56) Entgegenhaltungen:
- JP-A- H05 686
- JP-A- S5 744 531
- JP-A- H03 284 495
- JP-A- S59 227 522
- JP-A- 2004 338 467
- JP-A- 2005 254 873
- JP-A- 2013 180 644
- JP-U- S6 084 323

## Beschreibung

Die Erfindung betrifft eine Luftleitvorrichtung für ein Motorrad, die zum definierten Leiten der Fahrtwind-Luftströmung im Bereich einer Motorradgabel ausgebildet ist.

Für Sportmotorräder wird angestrebt, die Werte des Luftwiderstands und Auftriebs möglichst gering zu gestalten. Als ein Bereich mit Potenzial zur Verbesserung gegenüber herkömmlichen Lösungen zeigte sich der Gabeldurchbruch mit dem Bereich zwischen dem Vorderrad und der Frontverkleidung, in dem sich die Motorradgabel von dem Vorderrad im Wesentlichen in vertikaler Richtung zum Lenker erstreckt und zumeist die Luftzuführung für den Kühler erfolgt. Aufgrund der insbesondere bei hohen Geschwindigkeiten feststellbaren starken Verwirbelungen der Luftströmung im Bereich des Gabeldurchbruchs erhöhen sich der Cw-Wert und Auftrieb des Motorrads. Zudem erfolgt die Luftzuführung zum Kühler im Wesentlichen unbeeinflusst und mithin mit Verlusten.

Druckschriftlicher Stand der Technik im vorliegenden technischen Gebiet ist in den Dokumenten JPH03284495A, JPH05686A, JP2005254873A, JPS6084323U, JPS59227522A, JPS5744531A, JP2004338467A, JP2013180644A offenbart, wobei ein jedes dieser Dokumente die Merkmale des Oberbegriffs von Anspruch 1 offenbart.

Der Erfindung liegt deshalb die Aufgabe zugrunde, eine Luftleitvorrichtung bereit zu stellen, mit deren Hilfe der Bereich des Gabeldurchbruchs eines Motorrads so verbessert werden kann, dass der Luftwiderstand und Auftrieb des Motorrads reduziert sowie der Fahrtwind in Strömungsrichtung nachfolgenden Bauteilen wie dem Kühler effektiver zugeführt werden können.

Diese Aufgaben werden gelöst mit einer Merkmalskombination gemäß Patentanspruch 1.

Erfindungsgemäß wird eine Luftleitvorrichtung für ein Motorrad vorgeschlagen, die zum definierten Leiten der Fahrtwind-Luftströmung im Bereich einer Motorradgabel ausgebildet ist, wobei die Luftleitvorrichtung zumindest ein in Längsrichtung gesehen hinteres Leitelement aufweist, das ausgebildet ist, rückseitig zur Motorradgabel fest an dem Motorrad befestigt zu werden, und ein in Längsrichtung gesehen vorderes Leitelement aufweist, das ausgebildet ist, vorderseitig zur Motorradgabel mittelbar oder unmittelbar an dem hinteren Leitelement befestigt zu werden, wobei das vordere Leitelement gegenüber dem hinteren Leitelement um eine Vertikalachse drehbar ist.

Dabei werden die Längsrichtung als Fahrtrichtung des Motorrads, die Querrichtung als in seitlicher Richtung senkrecht zur Längsrichtung und als Vertikalachse die Achse parallel zu der Motorradgabelachse definiert. Eine aus fahrdynamischer Sicht mögliche gewinkelte Anstellung der Motorradgabel gegenüber der tatsächlichen Vertikalachse bleibt bei dieser Betrachtung aus Vereinfachungsgründen außer Betracht.

Die Luftleiteinrichtung ist ausgebildet, zumindest mit dem vorderen Leitelement unterseitig flächig an der Frontverkleidung anzuliegen und einen Lufteintritt in vertikaler Richtung hin zur Gabelbrücke zu minimieren. Zudem wird bei der Fahrt die in den Bereich des Gabeldurchbruchs eintretende Luft in vordefinierter Weise hin zum Kühler geleitet. Durch die relative Beweglichkeit des vorderen zum hinteren Leitelement erfolgt die Luftleitung nicht nur bei Geradeausfahrt, sondern auch während eines Lenkeinschlags, bei dem die Motorradgabel um die Vertikalachse rotiert.

Das hintere Leitelement ist vorzugsweise direkt an dem Kühler des Motorrads befestigbar und bildet einen unmittelbaren Anschluss der Luftleiteinrichtung an den Kühler. Es erstreckt sich in Querrichtung über die gesamte Breite des Gabeldurchbruchs, so dass auch der Bereich in Längsrichtung gesehen hinter der Motorradgabel flächig überdeckt ist.

In einer vorteilhaften Ausführungsvariante ist vorgesehen, dass das vordere Leitelement einen Vorderabschnitt zur Erstreckung vorderseitig zu der Motorradgabel und einen sich daran anschließenden Zentralabschnitt zur Erstreckung zwischen der Motorradgabel aufweist. Die beiden Bereiche überdecken somit flächig den Abschnitt des Gabeldurchbruchs seitlich und vor der Motorradgabel. Die Erstreckung des vorderen Leitelements in Längsrichtung ist um ein Vielfaches größer ausgebildet als diejenige des hinteren Leitelements, um die Abdeckung des Gabeldurchbruchs vollflächig und in allen Fahrsituationen, d.h. auch bei einem Lenkeinschlag zu gewährleisten.

Ferner ist eine Ausführung günstig, bei der das vordere Leitelement zwei Ausnehmungen aufweist, die ausgebildet sind, die Motorradgabel in Umfangsrichtung zumindest teilweise aufzunehmen bzw. zu umschließen. Die Motorradgabel soll das Leitelement über die Ausnehmungen durchdringen können. Gleichzeitig kann sich das vordere Leitelement jedoch derart um die Motorradgabel erstrecken, dass die im Querschnitt im Wesentlichen runde Form nachgebildet ist und das vordere Leitelement die Motorradgabel vorderseitig umschließen kann. Die Rundung der Aussparung ist demnach an den Außendurchmesser der Motorradgabel angepasst, um Luftspalte zwischen der Aussparung und der Motorradgabel zu vermeiden.

Das hintere Leitelement weist in der erfindungsgemäßen Ausführung zwei Aussparungen auf, die ausgebildet sind, die Motorradgabel bei einem Lenkeinschlag zumindest teilweise von hinten zu umgreifen. Die Ausnehmungen werden vorgesehen, um eine Lenkbewegung der Motorradgabel nicht zu blockieren. Bei einer Lenksituation liegt die eingelenkte Seite der Motorradgabel innerhalb der Ausnehmung des hinteren Leitelements an. Das vordere Leitelement bewegt sich in die Lenkrichtung mit der Motorradgabel mit und bildet mit dem hinteren Leitelement einen im Wesentlichen geschlossenen Ring um die eingeschlagene Seite der Motorradgabel.

Ferner ist eine Ausführungsform vorteilhaft, bei der der Vorderabschnitt des vorderen Leitelements eine Vorderkante mit runder Außenkontur aufweist. Dabei erstreckt sich die Vorderkante bzw. das vordere Leitelement in Querrichtung so weit nach außen, dass die Motorradgabel in Projektion seitlich überdeckt wird. Hierdurch wird eine Luftführung bereits in Längsrichtung vor der Motorradgabel entlang dem Gabeldurchbruch realisiert.

Der Zentralabschnitt des vorderen Leitelements ist derart dimensioniert, dass er in Längsrichtung eine Erstreckung aufweist, um die Motorradgabel in Längsrichtung zu überdecken bzw. zu umschließen. Der Gabeldurchbruch wird somit flächig durch das vordere Leitelement sowohl seitlich als auch vorderseitig abgedeckt.

In einer Weiterbildung der obigen Ausführung ist vorgesehen, dass das Luftleitvorrichtung zusätzlich ein in Längsrichtung gesehen mittleres Leitelement aufweist, das zwischen dem vorderen und hinteren Leitelement angeordnet, unmittelbar mit dem vorderen Leitelement verbunden und gegenüber dem hinteren Leitelement um die Vertikalachse drehbar ist. Die Verwendung des mittleren Leitelements erhöht die durch das Luftleitelement abdeckbare Fläche des Gabeldurchbruchs.

In einer Variante wird dabei vorgesehen, dass das mittlere Leitelement Seitenelemente umfasst, die seitlich an dem mittleren Leitelement angeordnet sind, so dass sie rückseitig die Motorradgabel umgreifen und den Gabeldurchbruch in diesem Bereich abdecken können. Alternativ werden Seitenelemente an dem hinteren Leitelement beweglich befestigt, erstrecken sich aber zur Abdeckung ebenfalls hinter der Motorradgabel.

Die Konstruktion ist dadurch weitergebildet, auch die Abdeckung der Kühlerseite darzustellen. Bei vollem Lenkeinschlag besteht nur ein geringer Abstand zwischen Motorradgabel und Kühler. Ein festes Bauteil, beispielsweise an dem hinteren Leitelement kann nur diesen kleinen Bereich abdecken. Dadurch entsteht eine Lücke in der Nullstellung der Lenkung und einseitig bei Lenkeinschlag. Um diesen Bereich vollständig zu verschließen und bei einem Lenkeinschlag einen Freiraum für die Bewegung der Motorradgabel zu schaffen, wird an der Luftleitvorrichtung ein Bewegungsmechanismus vorgesehen, mittels dem die Seitenelemente relativ gegenüber dem hinteren Leitelement bewegbar sind.

In einem ersten Ausführungsbeispiel wird der Bewegungsmechanismus als Klappmechanismus mit gegenüber dem hinteren Leitelement vertikal wegklappenden Seitenelementen ausgebildet. Die Krafteinleitung zum Wegklappen der Seitenklappe erfolgt über die Motorradgabel. Zudem kann an dem hinteren Leitelement in einer Ausführung eine Führung für die Bewegungsrichtung der Seitenklappe vorgesehen werden, um eine definierte Bewegung sicherzustellen.

In einem alternativen Ausführungsbeispiel wird der Bewegungsmechanismus als Verschiebemechanismus mit sich gegenüber dem hinteren Leitelement verschieblich angeordneten Seitenelementen ausgebildet ist, wobei die Verschiebung der Seitenelemente in einer Ebene erfolgt, die parallel zu einer Erstreckungsebene des hinteren Leitelements ist. Die Krafteinleitung zum Verschieben der Seitenklappe erfolgt ebenfalls über die Motorradgabel. Die Seitenklappen können bei dieser Ausführung zur Seite und auf oder unter das hintere Leitelement geschoben werden.

In einer Weiterbildung ist ferner vorgesehen, dass die Seitenelemente an dem mittleren Leitelement jeweils über eine Feder gehalten sind, die jeweils eine permanente Rückstellkraft auf die Seitenelemente in eine Ausgangsstellung ausübt. Bei der Rückführung der Motorradgabel in eine Geradeausstellung werden die Seitenelemente zurück in ihre Ausgangslage geführt und liegen somit permanent an der Motorradgabel an und verschließen den Gabeldurchbruch.

Die Luftleitvorrichtung ist ferner dadurch gekennzeichnet, dass das vordere Leitelement, das hintere Leitelement und/oder das mittlere Leitelement und/oder die Seitenelemente zumindest abschnittsweise flächig aufeinander aufliegend angeordnet sind. Bevorzugt wird, dass alle der Leitelemente flächig aufeinander anliegen, um einen scheibenartigen Gesamtkörper zu bilden, der sich um die Motorradgabel bis zum Kühler erstreckt.

In einer günstigen Ausführungsvariante sind an dem hinteren Leitelement ferner Führungslöcher vorgesehen, deren Form einer Bahnkurve der Motorradgabel bei einem Lenkeinschlag entsprechen, und in die an dem vorderen Leitelement ausgebildete komplementäre Führungsmittel eingreifen, um das vordere Leitelement bei einem Lenkeinschlag um die Vertikalachse entlang der Bahnkurve zu bewegen. Auch das mittlere Leitelement kann entsprechend über die Führungslöcher geführt werden. Als Führungsmittel können angespritzte Pins, Schrauben oder andere dem Fachmann aus dem Stand der Technik bekannte Mittel verwendet werden.

Zur Anbindung der Luftleitvorrichtung an Bauteile des Motorrads ist in einer vorteilhaften Ausführungsform vorgesehen, dass das vordere Leitelement und das hintere Leitelement in einem Anschlussbereich an Bauteile des Motorrads in einem seitlichen Querschnitt gesehen eine Stufe aufweisen, die einen zumindest abschnittsweise überlappenden Anschluss an die Bauteile des Motorrads ermöglichen. Als Bauteile des Motorrads dienen dabei vorderseitig die Unterseite der Frontverkleidung und rückseitig der Kühler. Über die stufenartige Anbindung schließt die Luftleitvorrichtung flächig, jeweils in Längsrichtung abgestützt und zumindest teilweise abgedichtet an den Motorradbauteilen ab.

Um ungewollte Reibungen der Leitelemente an der Motorradgabel zu vermeiden können die Kanten der Leitelemente abgerundet oder mit einem weichen Zusatzmaterial umschlossen werden.

Als Material wird für die Bauteile der Luftleitvorrichtung vorzugsweise Kunststoff verwendet.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine erste Ausführungsform der Luftleiteinrichtung montiert an einem Motorrad, in einer Ansicht von unten;
- Fig. 2: eine zweite Ausführungsform der Luftleiteinrichtung, in einer Ansicht von oben;
- Fig. 3: eine dritte Ausführungsform der Luftleiteinrichtung, in einer Ansicht von oben;
- Fig. 4: eine Darstellung der dritten Ausführungsform gemäß Figur 3 montiert an einem Motorrad während eines Lenkeinschlags, in einer Ansicht von unten.

Gleiche Bezugszeichen benennen gleiche Teile in allen Ansichten.

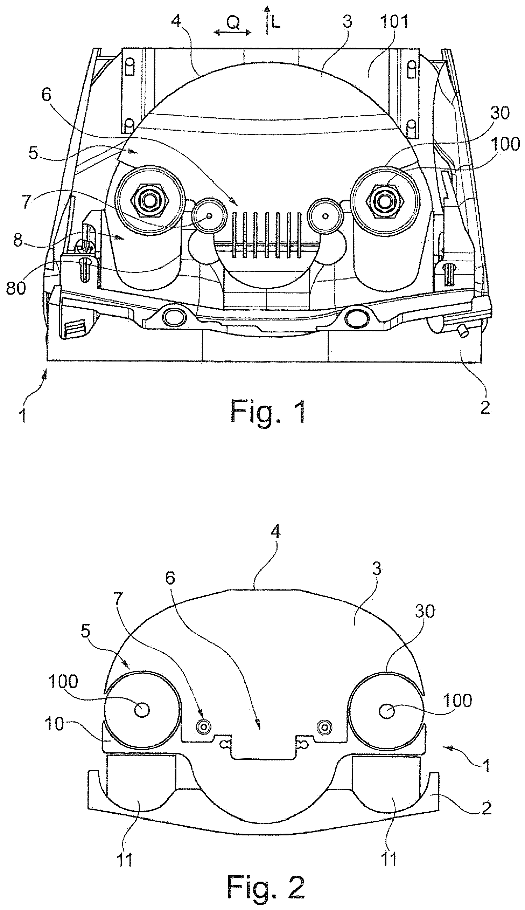

In Figur 1 ist eine erste Ausführungsform der Luftleiteinrichtung 1 in einem an einem Motorrad montierten Zustand in einer Ansicht von unten dargestellt. Von dem Motorrad sind zum besseren Verständnis die Frontverkleidung 101 und die Motorradgabel 100 gezeigt. Die Luftleitvorrichtung 1 umfasst ein in Längsrichtung L gesehen hinteres Leitelement 2 auf, das rückseitig zur Motorradgabel 100 fest an dem Kühler des Motorrads befestigt ist und sich über die gesamte Breite einteilig erstreckt, so dass der Bereich des Kühlers in vertikaler Richtung gesehen abgedeckt ist. Das hintere Leitelement 2 weist zwei zur Motorradgabel 100 komplementär gerundet geformte Aussparungen 8 auf, in welche die Motorradgabel 100 bei einem Lenkeinschlag versetzt werden kann und, die die Motorradgabel 100 im angelegten Zustand rückseitig und seitlich umgreifen. Über sich in Längsrichtung erstreckende, an dem hinteren Leitelement 2 angeformte Stege 80 ist zwischen dem vorderen und hinteren Leitelement 3, 2 eine Verbindung hergestellt. An den an den Stegen 80 vorgesehenen Befestigungspunkten 7 sind das vordere und hintere Leitelement 3, 2 um die Vertikalachse drehbar zueinander gelagert befestigt. Das vordere Leitelement 3 hat beidseitig Ausnehmungen 30, die ebenfalls komplementär zur Rundung der Motorradgabel 100 geformt sind und diese in Umfangsrichtung abschnittsweise aufnehmen bzw. umschließen.

In Längsrichtung gesehen vorne erstreckt sich das vordere Leitelement 3 mit seinem Vorderabschnitt 5 vorderseitig zur Motorradgabel 100, wobei der Vorderabschnitt 5 eine in Fahrtrichtung gerichtete Vorderkante 4 mit runder Außenkontur aufweist. In seitlicher Querrichtung Q erstreckt sich das vordere Leitelement 3 mit seiner Außenkante 4 über die Projektion der Motorradgabel 100 hinaus, um diese in einer Projektion von vorne zu überdecken. An den Vorderabschnitt 5 schließt sich der Zentralabschnitt 6 an und erstreckt sich zwischen der Motorradgabel 100 bis zum hinteren Leitelement 2. Dadurch erfolgt eine im Wesentlichen vollständige Abdeckung des Gabeldurchbruchs sowohl bei Geradeausfahrt, wie in Figur 1 gezeigt, als auch im eingelenkten Zustand.

Figur 2 zeigt eine zweite Ausführungsform der Luftleiteinrichtung 1 in einer Ansicht von oben ohne Motorrad. Das vordere Leitelement 3 stimmt im Wesentlichen mit demjenigen aus Figur 1 überein, jedoch erstreckt sich der Vorderabschnitt 5 in Querrichtung weiter nach außen und in Längsrichtung weiter nach hinten. In der Ausführung gemäß Figur 2 umfasst die Luftleitvorrichtung 1 zusätzlich ein in Längsrichtung gesehen mittleres Leitelement 10, das zwischen dem vorderen und hinteren Leitelement 2, 3 angeordnet und unmittelbar mit dem vorderen Leitelement 3 verbunden ist. Sowohl das vordere Leitelement 3 als auch das mittlere Leitelement 10 sind gegenüber dem hinteren Leitelement 2 um die Vertikalachse drehbar und können bei einem Lenkeinschlag durch die Motorradgabel 100 verschoben werden. Durch die Verwendung des mittleren Leitelements 10 erstreckt sich das hintere Leitelement 2 weniger weit in Längsrichtung, sondern bildet den Übergang und Anschluss zum Kühler (nicht gezeigt).

Der bei der Ausführung gemäß Figur 1 freie Gabeldurchbruchsbereich rückseitig zur Motorradgabel 100 wird in der Ausführung gemäß Figur 2 geschlossen, indem an dem mittleren Leitelement 10 Seitenelemente 11 angeordnet sind, die seitlich an dem mittleren Leitelement 10 angeordnet sind, so dass sie rückseitig die Motorradgabel umgreifen können. Über einen als Klappmechanismus ausgebildeten Bewegungsmechanismus können die Klappen der Seitenelemente 11 gegenüber dem hinteren Leitelementen 2 vertikal wegklappen, wenn ein Lenkeinschlag erfolgt. Beim Zurücklenken in die Nullstellung werden die Klappen der Seitenelemente 11 beispielsweise über Torsionsfedern zurück in die in Figur 2 gezeigte Position gezogen.

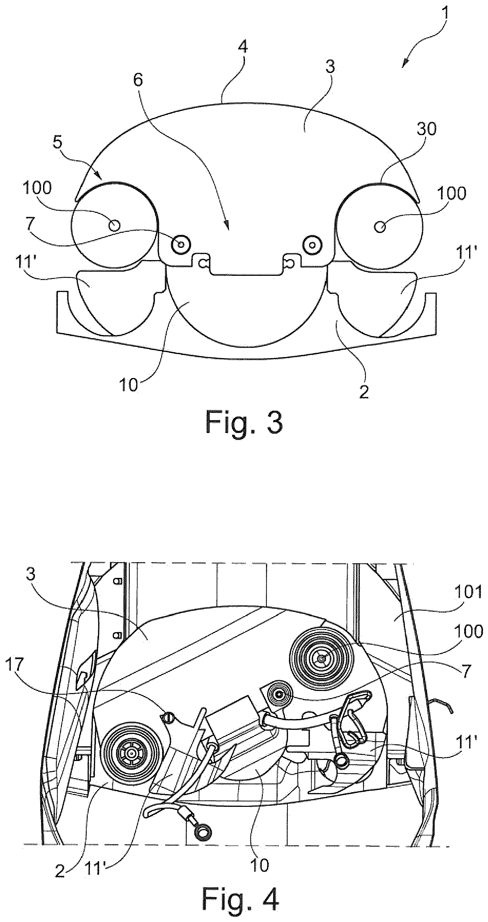

Figur 3 zeigt eine dritte Ausführungsform der Luftleiteinrichtung 1 in einer Ansicht von oben ohne die Darstellung des Motorrads. Die Merkmale bezüglich des vorderen und hinteren Leitelements 3, 2 stimmen im Wesentlichen mit denjenigen aus Figur 2 überein. Das mittlere Leitelement 10 ist an dem vorderen Leitelement 3 wie in Figur 2 befestigt, jedoch weist das hintere Leitelement 2 sich in Längsrichtung erstreckende Stege auf, an denen gesonderte Seitenelemente 11' um die Vertikalachse drehbar an Befestigungspunkten 17 befestigt sind. Der Bewegungsmechanismus für die Seitenelemente 11' ist als Verschiebemechanismus ausgebildet, wobei bei einem in Figur 4 von unten dargestellten Lenkeinschlag das jeweilige Seitenelement 11' unter das hintere Leitelemente 2 parallel zu seiner Erstreckungsebene in Querrichtung gedrückt wird. Die Rückführung des jeweils versetzten Seitenelements 11' in die Nullstellung erfolgt ebenfalls beispielsweise über eine nicht dargestellte Torsionsfeder.

Für alle Ausführungen gilt, dass das vordere Leitelement 3, das hintere Leitelement 2, das mittlere Leitelement 10 und die Seitenelemente 11, 11' vorzugsweise flächig aufeinander aufliegen und einen scheibenartigen Körper zur Abschottung des Gabeldurchbruchs und zur Luftleitung hin zum Kühler bilden.

Die Form der Seitenelemente 11' beschränkt sich nicht auf die gezeigte Ausführung, in der sie im Wesentlichen einen Vierteilkreis darstellt. Es sind auch Varianten möglich, bei dem insbesondere die der Motorradgabel 100 zuweisende Seite mit einer Rundung versehen ist, die ausgebildet ist, die Motorradgabel 100 zumindest abschnittsweise zu umschließen.

Ferner sind in allen Ausführungsvarianten bei dem vorderen Leitelement 3, dem hinteren Leitelement 2, dem mittleren Leitelement 10 oder den Seitenelementen 11, 11' Durchbrüche vorsehbar, durch die beispielsweise Bremsleitungen oder dergleichen hindurchgeführt werden können. Die Leitelemente 2, 3, 10 und die Seitenelemente 11, 11 können ferner Führungen und Führungsmittel aufweisen, um relativ zueinander geführt bewegt werden zu können.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können in der Luftleitvorrichtung weitere Leitelemente integriert werden, um eine noch größere Flexibilität zur Abdeckung von Bereichen des Gabeldurchbruchs beim Lenkeinschlag zu realisieren.

## Patentansprüche

1. Luftleitvorrichtung für ein Motorrad, die zum definierten Leiten der Fahrtwind-Luftströmung im Bereich einer Motorradgabel ausgebildet ist, wobei die Luftleitvorrichtung (1) zumindest ein in Längsrichtung gesehen hinteres Leitelement (2) aufweist, das ausgebildet ist, rückseitig zur Motorradgabel fest an dem Motorrad befestigt zu werden, und ein in Längsrichtung gesehen vorderes Leitelement (3) aufweist, das ausgebildet ist, vorderseitig zur Motorradgabel mittelbar oder unmittelbar an dem hinteren Leitelement (2) befestigt zu werden wobei das vordere Leitelement (3) gegenüber dem hinteren Leitelement (2) um eine Vertikalachse drehbar ist, **dadurch gekennzeichnet, dass** das hintere Leitelement (2) zwei Aussparungen (8) aufweist, die ausgebildet sind, die Motorradgabel bei einem Lenkeinschlag zumindest teilweise zu umgreifen.

2. Luftleitvorrichtung für ein Motorrad nach Anspruch 1, **dadurch gekennzeichnet, dass** das vordere Leitelement (3) zwei Ausnehmungen (30) aufweist, die ausgebildet sind, die Motorradgabel in Umfangsrichtung zumindest teilweise zu umschließen.

3. Luftleitvorrichtung für ein Motorrad nach Anspruch 1 oder 2, **dadurch gekennzeichnet, dass** das vordere Leitelement (3) einen Vorderabschnitt (5) zur Erstreckung vorderseitig zu der Motorradgabel und einen sich daran anschließenden Zentralabschnitt (6) zur Erstreckung zwischen der Motorradgabel aufweist.

4. Luftleitvorrichtung für ein Motorrad nach dem vorigen Anspruch, **dadurch gekennzeichnet, dass** der Vorderabschnitt (5) eine Vorderkante (4) mit einer runden Außenkontur aufweist, wobei die Vorderkante (5) in Querrichtung eine Erstreckung aufweist, die Motorradgabel zu überdecken.

5. Luftleitvorrichtung für ein Motorrad nach zumindest einem der Ansprüche 3 bis 4, **dadurch gekennzeichnet, dass** der Zentralabschnitt (6) in Längsrichtung eine Erstreckung aufweist, die Motorradgabel zu überdecken.

6. Luftleitvorrichtung für ein Motorrad nach zumindest einem der vorigen Ansprüche, **dadurch gekennzeichnet, dass** es ein in Längsrichtung gesehen mittleres Leitelement (10) aufweist, das zwischen dem vorderen und hinteren Leitelement (2, 3) angeordnet und unmittelbar mit dem vorderen Leitelement (3) verbunden und gegenüber dem hinteren Leitelement (2) um die Vertikalachse drehbar ist.

7. Luftleitvorrichtung für ein Motorrad nach dem vorigen Anspruch, **dadurch gekennzeichnet, dass** das mittlere Leitelement (10) Seitenelemente (11) umfasst, die seitlich an dem mittleren Leitelement (10) angeordnet sind, so dass sie rückseitig die Motorradgabel umgreifen.

8. Luftleitvorrichtung für ein Motorrad nach dem vorigen Anspruch, **dadurch gekennzeichnet, dass** es Seitenelemente (11') umfasst, die seitlich zu dem mittleren Leitelement (10) angeordnet und an dem hinteren Leitelement (2) beweglich befestigt sind.

9. Luftleitvorrichtung für ein Motorrad nach dem vorigen Anspruch, **dadurch gekennzeichnet, dass** ein Bewegungsmechanismus vorgesehen ist, mittels dem die Seitenelemente (11, 11') relativ gegenüber dem hinteren Leitelement (2) bewegbar sind, um bei einem Lenkeinschlag einen Freiraum für die Bewegung der Motorradgabel zu schaffen.

10. Luftleitvorrichtung für ein Motorrad nach dem vorigen Anspruch, **dadurch gekennzeichnet, dass** der Bewegungsmechanismus als Klappmechanismus mit gegenüber dem hinteren Leitelement (2) vertikal wegklappenden Seitenelementen (11) ausgebildet ist.

11. Luftleitvorrichtung für ein Motorrad nach Anspruch 8, **dadurch gekennzeichnet, dass** der Bewegungsmechanismus als Verschiebemechanismus mit sich gegenüber dem hinteren Leitelement (2) verschieblich angeordneten Seitenelementen (11') ausgebildet ist, wobei die Verschiebung der Seitenelemente (11') in einer Ebene erfolgt, die parallel zu einer Erstreckungsebene des hinteren Leitelements (2) ist.

12. Luftleitvorrichtung für ein Motorrad nach zumindest einem der vorigen Ansprüche, **dadurch gekennzeichnet, dass** das vordere Leitelement (3), das hintere Leitelement (2) und/oder das mittlere Leitelement (10) und/oder die Seitenelemente (11, 11') zumindest abschnittsweise flächig aufeinander aufliegend angeordnet sind.

13. Luftleitvorrichtung für ein Motorrad nach zumindest einem der vorigen Ansprüche 7 bis 12, **dadurch gekennzeichnet, dass** die Seitenelemente (11) jeweils über eine Feder gehalten sind, die jeweils eine permanente Rückstellkraft auf die Seitenelemente (11, 11') in eine Ausgangsstellung ausübt.

14. Luftleitvorrichtung für ein Motorrad nach zumindest einem der vorigen Ansprüche, **dadurch gekennzeichnet, dass** das hintere Leitelement (2) Führungslöcher, deren Form einer Bahnkurve der Motorradgabel bei einem Lenkeinschlag entspricht, und in die an dem vorderen Leitelement (3) ausgebildete komplementäre Führungsmittel eingreifen, um das vordere Leitelement (3) bei einem Lenkeinschlag um die Vertikalachse entlang der Bahnkurve zu bewegen.

15. Luftleitvorrichtung für ein Motorrad nach zumindest einem der vorigen Ansprüche, **dadurch gekennzeichnet, dass** das vordere Leitelement (3) und/oder das hintere Leitelement (2) in einem Anschlussbereich an Bauteile des Motorrads in einem seitlichen Querschnitt gesehen eine Stufe aufweisen, die einen zumindest abschnittsweise überlappenden Anschluss an die Bauteile des Motorrads ermöglichen.

## Claims

1. An air-deflecting device for a motorcycle, which is designed for the defined deflection of the airflow air stream in the region of a motorcycle fork, wherein the air-deflecting device (1) has at least one rear deflection element (2), viewed in the longitudinal direction, which is designed to be fastened securely to the motorcycle to the rear side of the motorcycle fork, and a front deflection element (3), viewed in the longitudinal direction, which is designed to be fastened indirectly or directly to the rear deflection element (2) to the front side of the motorcycle fork, wherein the front deflection element (3) is rotatable about a vertical axis relative to the rear deflection element (2), **characterised in that** the rear deflection element (2) has two cutouts (8) which are designed to at least partially encompass the motorcycle fork when at a steering angle.

2. An air-deflecting device for a motorcycle according to Claim 1, **characterised in that** the front deflection element (3) has two recesses (30) which are designed to at least partially enclose the motorcycle fork in the peripheral direction.

3. An air-deflecting device for a motorcycle according to Claim 1 or Claim 2, **characterised in that** the front deflection element (3) has a front portion (5) for extending to the front side relative to the motorcycle fork and an adjoining central portion (6) for extending between the motorcycle fork.

4. An air-deflecting device for a motorcycle according to the preceding claim, **characterised in that** the front portion (5) has a front edge (4) with a round external contour, the front edge (5) in the transverse direction having an extent sufficient to cover the motorcycle fork.

5. An air-deflecting device for a motorcycle according to at least one of Claims 3 to 4, **characterised in that** the central portion (6) in the longitudinal direction has an extent sufficient to cover the motorcycle fork.

6. An air-deflecting device for a motorcycle according to at least one of the preceding claims, **characterised in that** it has a middle deflection element (10), viewed in the longitudinal direction, which is arranged between the front and rear deflection element (2, 3) and is connected directly to the front deflection element (3) and is rotatable about the vertical axis relative to the rear deflection element (2).

7. An air-deflecting device for a motorcycle according to the preceding claim, **characterised in that** the middle deflection element (10) comprises side elements (11) which are arranged laterally on the middle deflection element (10), so that they encompass the motorcycle fork to the rear side.

8. An air-deflecting device for a motorcycle according to the preceding claim, **characterised in that** it comprises side elements (11') which are arranged laterally to the middle deflection element (10) and are fastened movably to the rear deflection element (2).

9. An air-deflecting device for a motorcycle according to the preceding claim, **characterised in that** a movement mechanism is provided by means of which the side elements (11, 11') are movable relative to the rear deflection element (2), in order to provide a clearance for the movement of the motorcycle fork when at a steering angle.

10. An air-deflecting device for a motorcycle according to the preceding claim, **characterised in that** the movement mechanism is designed as a folding mechanism with side elements (11) which fold away vertically relative to the rear deflection element (2).

11. An air-deflecting device for a motorcycle according to Claim 8, **characterised in that** the movement mechanism is designed as a displacement mechanism with side elements (11') arranged displaceably relative to the rear deflection element (2), the displacement of the side elements (11') taking place in a plane which is parallel to a plane of extent of the rear deflection element (2).

12. An air-deflecting device for a motorcycle according to at least one of the preceding claims, **characterised in that** the front deflection element (3), the rear deflection element (2) and/or the middle deflection element (10) and/or the side elements (11, 11') are arranged, at least in portions, lying on one another in surface-to-surface contact.

13. An air-deflecting device for a motorcycle according to at least one of the preceding Claims 7 to 12, **characterised in that** the side elements (11) are held in each case by means of a spring which in each case exerts on the side elements (11, 11') a permanent restoring force into a starting position.

14. An air-deflecting device for a motorcycle according to at least one of the preceding claims, **characterised in that** the rear deflection element (2) has guide holes, the form of which corresponds to a path curve of the motorcycle fork when at a steering angle, and into which complementary guide means formed on the front deflection element (3) engage, in order to move the front deflection element (3) along the path curve about the vertical axis when at a steering angle.

15. An air-deflecting device for a motorcycle according to at least one of the preceding claims, **characterised in that** the front deflection element (3) and/or the rear deflection element (2) in a region of attachment to components of the motorcycle, viewed in a lateral cross-section, have a step which permit an overlapping - at least in portions - attachment to the components of the motorcycle.

## Revendications

1. Dispositif de guidage d'air destiné à une moto qui est réalisé pour permettre un guidage défini du flux de vent de déplacement dans la zone de la fourche de la moto, le dispositif de guidage d'air (1) comportant, au moins un élément de guidage arrière (2) dans la direction longitudinale du véhicule qui est réalisé pour être fixé solidairement sur la moto à l'arrière de la fourche de celle-ci ainsi qu'un élément de guidage avant (3) dans la direction longitudinale du véhicule qui est réalisé pour être fixé directement ou indirectement sur l'élément de guidage arrière (2), à l'avant de la fourche de la moto l'élément de guidage avant (3) étant mobile en rotation autour d'un axe vertical par rapport à l'élément de guidage arrière (2),
**caractérisé en ce que**
l'élément de guidage arrière (2) comporte deux évidements (8) qui sont réalisés de façon à entourer au moins partiellement la fourche de la moto lors d'un braquage.

2. Dispositif de guidage d'air destiné à une moto conforme à la revendication 1,
**caractérisé en ce que**
l'élément de guidage avant (3) comporte deux évidements (30) qui sont réalisés pour entourer au moins partiellement la fourche de la moto en direction périphérique.

3. Dispositif de guidage d'air destiné à une moto conforme à la revendication 1 ou 2,
**caractérisé en ce que**
l'élément de guidage avant (3) comporte un segment avant (5) s'étendant à l'avant de la fourche de la moto, et un segment central (6) se connectant à celui-ci s'étendant à la partie interne de la fourche de la moto.

4. Dispositif de guidage d'air destiné à une moto conforme à la revendication précédente,
**caractérisé en ce que**
le segment avant (5) a une arête avant (4) ayant un contour externe arrondi et l'arête avant (5) a en direction transversale une extension permettant de recouvrir la fourche de la moto.

5. Dispositif de guidage d'air destiné à une moto conforme à au moins l'une des revendications 3 à 4,
**caractérisé en ce que**
le segment central (6) a en direction longitudinale une extension permettant de recouvrir la fourche de la moto.

6. Dispositif de guidage d'air destiné à une moto conforme à au moins l'une des revendications précédentes,
**caractérisé en ce qu'**
il comporte un élément de guidage médian dans la direction longitudinale, qui est monté entre l'élément de guidage avant (10) et l'élément de guidage arrière (2, 3) et est directement relié à l'élément de guidage avant (3) et est mobile en rotation autour de l'axe vertical par rapport à l'élément de guidage arrière (2).

7. Dispositif de guidage d'air destiné à une moto conforme à la revendication précédente,
**caractérisé en ce que**
l'élément de guidage médian (10) comporte des éléments latéraux (11) qui sont montés latéralement sur cet élément de guidage médian (10) de façon à entourer la fourche de la moto du côté arrière de celle-ci.

8. Dispositif de guidage d'air destiné à une moto conforme à l'une des revendications précédentes,
**caractérisé en ce qu'**
il comporte des éléments latéraux (11') qui sont montés latéralement par rapport à l'élément de guidage médian (10) et sont fixés en étant mobiles sur cet élément de guidage arrière (2).

9. Dispositif de guidage d'air destiné à une moto conforme à la revendication précédente,
**caractérisé en ce qu'**
il est prévu un mécanisme de déplacement au moyen duquel les éléments latéraux (11, 11') peuvent être relativement déplacés par rapport à l'élément de guidage arrière (2), pour permettre de disposer, lors d'un braquage, d'un espace libre permettant le déplacement de la fourche de la moto.

10. Dispositif de guidage d'air destiné à une moto conforme à la revendication précédente,
**caractérisé en ce que**
le mécanisme de déplacement est réalisé sous la forme d'un mécanisme de basculement ayant des éléments latéraux (11) pouvant être repliés à la verticale par rapport à l'élément de guidage arrière (2).

11. Dispositif de guidage d'air destiné à une moto conforme à la revendication 8,
**caractérisé en ce que**
le mécanisme de déplacement est réalisé sous la forme d'un mécanisme de coulissement comportant des éléments latéraux (11') montés coulissants par rapport à l'élément de guidage arrière (2), et le coulissement des éléments latéraux (11') s'effectue dans un plan qui est parallèle au plan d'extension de l'élément de guidage arrière (2).

12. Dispositif de guidage d'air destiné à une moto conforme à au moins l'une des revendications précédentes,
**caractérisé en ce que**
l'élément de guidage avant (3), l'élément de guidage arrière (2) et/ou l'élément de guidage médian (10) et/ou les éléments latéraux (11, 11') s'applique(nt) à plat l'un sur l'autre(les uns sur les autres) au moins par segments.

13. Dispositif de guidage d'air destiné à une moto conforme à au moins l'une des revendications précédentes 7 à 12,
**caractérisé en ce que**
les éléments latéraux (11) sont respectivement maintenus par l'intermédiaire d'un ressort qui exerce respectivement une force de rappel permanente sur ces éléments latéraux (11, 11') vers une position initiale.

14. Dispositif de guidage d'air destiné à une moto conforme à au moins l'une des revendications précédentes,
**caractérisé en ce que**
l'élément de guidage arrière (2) comporte des perçages de guidage dont la forme correspond à la trajectoire de la fourche de la moto lors d'un braquage, et dans lesquels viennent en prise des moyens de guidage complémentaires réalisés sur l'élément de guidage avant (3) pour permettre de déplacer l'élément de guidage avant (3) autour de l'axe vertical le long de la trajectoire lors d'un braquage.

15. Dispositif de guidage d'air destiné à une moto conforme à au moins l'une des revendications précédentes,
**caractérisé en ce que**
l'élément de guidage avant (3) et/ou l'élément de guidage arrière (2) comporte(nt), dans une zone de connexion à des composants de la moto, en section transversale, un gradin permettant une connexion par chevauchement au moins par segment aux composants de la moto.
